# EUROPÄISCHE PATENTSCHRIFT

(11) **EP 0 981 684 B1**
(45) Veröffentlichungstag und Bekanntmachung des Hinweises auf die Patenterteilung: **18.09.2002**
(21) Anmeldenummer: 98930674.1
(22) Anmeldetag: 06.05.1998
(51) Int. Cl.: F02D 11/10, B60H 1/00, F24F 13/14

(54) **LASTVERSTELLEINRICHTUNG**
LOAD ADJUSTING DEVICE
SYSTEME DE REGULATION DE CHARGE

(30) Priorität: 13.05.1997 DE 19719991
(43) Veröffentlichungstag der Anmeldung: 01.03.2000
(73) Patentinhaber: Siemens Aktiengesellschaft, 80333 München (DE)
(72) Erfinder: BERNADING, Eugen, D-61250 Usingen (DE); WICKER, Herbert, D-65779 Kelkheim (DE)
(86) Internationale Anmeldenummer: EP9802661
(87) Internationale Veröffentlichungsnummer: WO98051918

(56) Entgegenhaltungen:
- EP-A- 0 413 082
- EP-A- 0 771 679
- DE-A- 3 809 910
- FR-A- 2 356 007
- US-A- 4 523 138
- PATENT ABSTRACTS OF JAPAN vol. 018, no. 644 (M-1718), 7. Dezember 1994 & JP 06 249037 A (HITACHI LTD), 6. September 1994

## Beschreibung

Die Erfindung betrifft eine Verstelleinrichtung mit einem einen Luftdurchlaßbereich verändernden Element gemäß den Merkmalen des Oberbegriffes des Patentanspruches 1.

Eine solche Verstelleinrichtung, die als Lastverstelleinrichtung zur Einstellung der Leistung einer Brennkraftmaschine ausgebildet ist, ist aus der DE 38 15 735 A1 bekannt. Hierbei ist ein Luftdurchlaßbereich vorgesehen, in dem eine Element, insbesondere eine auf einer Welle angeordnete Klappe, angeordnet ist, wobei das Element in Abhängigkeit von erfaßten Werten von einer elektronischen Regeleinrichtung ansteuerbar ist. Bei einem dieser Werte, die erfaßt werden, handelt es sich um die aktuelle Position des Elementes, die mit einem Istwerterfassungselement erfaßt wird. Das lstwerterfassungselement ist ein Potentiometer mit Schleiferarm und Schleiferbahnen, wobei der Schleiferarm an der Welle, an der das Element angeordnet ist, befestigt ist. Da dieses lstwerterfassungselement am Ende der Welle angeordnet ist, in dem sich auch weitere Komponenten wie Federn, Mitnehmer und dergleichen befinden, angeordnet ist, ist hierfür ein hoher Bauraum erforderlich. Zudem erfordert die Montage des lstwerterfassungselementes einschließlich der weiteren Komponenten einen hohen Montageaufwand.

Eine Erfassung der Stellung des Stellantriebes erfolgt nicht.

Aus der FR-A-2 356 007 ist eine Geschwindigkeitsregeleinrichtung für Kraftfahrzeuge bekannt, bei der die Stellung eines Fahrpedales erfaßt und in Abhängigkeit der erfaßten Pedalstellung ein Stellantrieb angesteuert werden kann. Durch eine manuell betätigbare Vorgabe können bestimmte Geschwindigkeiten vorgewählt werden, die unabhängig von der erfaßten Pedalstellung mittels des Stellantriebes eingestellt und eingehalten werden. Der Stellantrieb bewegt ein einen Luftdurchlaßbereich veränderndes Element, wobei eine Positionserfassungseinrichtung innerhalb des Stellantriebes vorgesehen ist, die ein die Stellung des Elementes darstellendes Signal liefert.

Aus der DE 42 41 020 A1 ist ein Drehsteller zum Verstellen einer Drosselklappe bekannt, der einen Antriebsmotor mit einer an die Drosselklappe angekoppelten Abtriebswelle aufweist. An der der Drosselklappe abgewandten Seite der Abtriebswelle ist hierbei ein Lagesensor zur Erfassung der Stellung der Drosselklappenwelle angeordnet.

Der Erfindung liegt daher die Aufgabe zugrunde, den Montageaufwand zu vereinfachen und die Verstelleinrichtung derart zu gestalten, daß diese möglichst kompakt gebaut ist und weiterhin eine präzise Erfassung der Stellung des Elementes ermöglicht wird.

Diese Aufgabe ist durch die Merkmale des Patentanspruches 1 gelöst.

Die Anordnung der Positionserfassungseinrichtung im Bereich des Stellantriebes hat den Vorteil, daß zur Verfügung stehender Bauraum im Bereich des Stellantriebes genutzt wird und Bauraum im Endbereich der Welle entfallen kann. Darüber hinaus ist es weiterhin von Vorteil, daß die Positionserfassungseinrichtung zusammen mit dem Stellantrieb vormontiert werden kann, so daß der Montageaufwand sich verringert. Erfolgt der Antrieb des Elementes untersetzt durch den Stellantrieb, erhöht sich die Präzision der Positionserfassung um ein Vielfaches.

Die Anordnung der Positionserfassungseinrichtung auf der eine Antriebsseite des Stellantriebes entgegengesetzten Seite hat den Vorteil, daß dadurch der bisherige freie Bauraum von der Positionserfassungseinrichtung ausgenutzt wird. Dadurch kann nicht nur der Stellantrieb selber, sondern die gesamte Verstelleinrichtung besonders kompakt ausgeführt werden. Ein weiterer Vorteil liegt darin, daß die Positionserfassungseinrichtung nicht durch Schmutz, Staub, Abrieb oder dergleichen, der auf der Antriebsseite eindringt oder entsteht, beeinträchtigt wird und somit die Präzision der Positionserfassungseinrichtung erhalten und deren Lebensdauer verlängert wird.

In Weiterbildung der Erfindung ist der Stellantrieb ein Elektromotor und die Positionserfassungseinrichtung im Bereich einer Motorwelle des Elektromotors angeordnet. Aufgrund dieser Ausgestaltung werden in einfacher und zuverlässiger Weise die Umdrehungen des Elektromotors, die ein Maß für die Stellung des Elementes sind, gezählt und ausgewertet. Als Auswertung kommt dabei die Drehrichtung, die Anzahl der Umdrehungen beziehungsweise Teilbereiche davon oder auch Werte wie beispielsweise überschrittener Winkelbereich pro Zeit in Betracht. Als Ausführung für die Positionserfassungseinrichtung kommen Potentiometer mit Schleifarmen und Kontaktbahnen, aber auch berührungslos wirkende Einrichtungen, wie beispielsweise Hallsensoren, Lichtschranken, kapazitiv wirkende Einrichtungen und dergleichen in Frage.

Ein bevorzugtes Anwendungsgebiet, auf das die Erfindung nicht beschränkt ist, ist eine Ausgestaltung der Verstelleinrichtung als Lastverstelleinrichtung zur Einstellung der Leistung einer Brennkraftmaschine, wobei das Element als Drosselklappe oder Drosselschieber ausgestaltet ist. Der Stellantrieb (Elektromotor) kann aber auch zum direkten oder indirekten (insbesondere untersetzten) Einstellen einer Einspritzpumpe oder einer Regelstange einer Diesel-Brennkraftmaschine eingesetzt werden.

Eine weitere bevorzugte Anwendung ist darin zu sehen, daß die Verstelleinrichtung ausgebildet ist als Luftzufuhreinrichtung einer Klimaeinrichtung (Klimaanlage), insbesondere eines Fahrzeuges. Durch Verstellen des den Luftdurchlaßbereich verändernden Elementes kann die Luftzufuhr von einem Außenbereich in einen Innenbereich des Fahrzeuges eingestellt (geregelt) werden, wobei die Verstelleinrichtung zur Einstellung von Frischluft, Umluft, Warmluft und/oder Kaltluft ausgebildet ist.

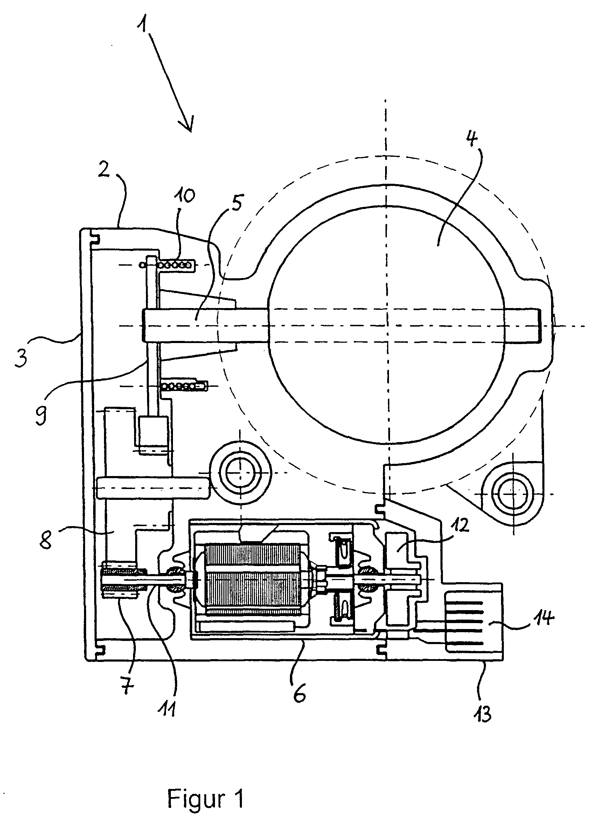

Eine Ausgestaltung der erfindungsgemäßen Verstelleinrichtung als Lastverstelleinrichtung ist in den weiteren Unteransprüchen, aus denen sich vorteilhafte Wirkungen ergeben, und im folgenden beschrieben sowie anhand der Figur 1 erläutert.

Figur 1 zeigt eine Lastverstelleinrichtung 1, die im wesentlichen aus einem Gehäuse 2 besteht, das mittels eines Deckels 3 verschlossen wird. Innerhalb dem Gehäuse 2 (ein sogenannter Drosselklappenstutzen) ist ein Luftdurchlaßbereich 4 vorgesehen, der einenends mit einem Luftansaugbereich und anderenends mit einem Luftansaugtrakt einer Brennkraftmaschine verbunden ist. Im Gehäuse 2 und den Luftdurchlaßbereich 4 durchstoßend ist eine Welle 5 angeordnet, wobei im Bereich des Luftdurchlaßbereiches 4 auf der Welle 5 eine nicht gezeigte Klappe (Drosselklappe) ist. Zur Einstellung dieser Klappe ist als Stellantrieb ein Elektromotor 6 ebenfalls in dem Gehäuse 2 integriert, wobei der Elektromotor 6 anstelle dessen auch in einem eigenständigen Gehäuse angeordnet sein kann, das dann an das Gehäuse 2 angeflanscht wird.

Der Elektromotor treibt über ein Untersetzungsgetriebe - bestehend aus Zahnrädern 7 bis 9 - die Welle 5 an, um die Klappe in die gewünschte Position (beispielsweise abhängig von einer Leistungsanforderung, die von einem Fahrpedal vorgegeben wird) einzustellen. Bei der Ausführung gemäß Figur 1 ist eine Rückstellfeder 10 vorgesehen, die in eine Verstellrichtung eine Kraftbeaufschlagung ausführt. Diese erfolgt in vorteilhafter Weise bei einer Lastverstelleinrichtung in Schließrichtung der Klappe, so daß in einer Schließstellung der Luftdurchlaßbereich 4 von der Klappe annähernd verschlossen oder komplett verschlossen ist.

Auf einer Motorwelle 11 des Elektromotors 6 ist eine Positionserfassungseinrichtung 12 in dem dem Untersetzungsgetriebe abgewandten Bereich der Motorwelle angeordnet. Dadurch wird der bisherige freie Bauraum von der Positionserfassungseinrichtung 12 ausgenutzt. Ein weiterer Vorteil liegt darin, daß die Positionserfassungseinrichtung 12 nicht durch Schmutz, Staub, Abrieb oder dergleichen, der in den Bereich des Untersetzungsgetriebes eindringen oder durch das Untersetzungsgetriebe selbst entstehen kann, beeinträchtigt und somit die Präzision erhalten und die Lebensdauer verlängert wird. Denkbar ist auch, daß die Positionserfassungseinrichtung 12 im Bereich der Motorwelle 11, die auf das Untersetzungsgetriebe (Zahnrad 7) wirkt, angeordnet ist. Weiterhin sind Anordnungen denkbar, daß die Motorwelle 11 in Verlängerung zu der Welle 5 angeordnet ist, so daß Motorwelle 11 und Welle 5 in einer Fluchtlinie liegen. So kann - im Gegensatz zu der im wesentlichen rechteckigen beziehungsweise fast quadratischen Ausgestaltung gemäß Figur 1 - eine im wesentlichen längliche Ausgestaltung der Lastverstelleinrichtung erreicht werden, wobei der Elektromotor 6 die Welle 5 entweder direkt (beispielsweise bilden Motorwelle 11 und Welle 5 eine Baueinheit) antreiben kann, oder daß der Elektromotor 6 beispielsweise über ein Planetengetriebe auf die Welle 5 untersetzt wirkt. In Abhängigkeit der Dimensionierung des Untersetzungsgetriebes ist es auch möglich, daß die Drehbewegung der Motorwelle 11 1:1 auf die Welle 5 übertragen wird. Es bleibt auch dann - wie schon in Figur 1 dargestellt - die parallele Anordnung von Motorwelle 11 zu Welle 5 erhalten. Neben der Untersetzung ist auch eine Übersetzung denkbar.

In Figur 1 ist weiterhin gezeigt, daß in dem dem Untersetzungsgetriebe abgewandten Bereich des Elektromotors 6 nicht nur die Positionserfassungseinrichtung 12, sondern auch ein Stecker 13 vorgesehen ist, wobei über elektrische Anschlüsse 14 des Steckers 13 (oder einer Buchse oder ein direkter Kabelanschluß) die Stromversorgung für den Elektromotor 6 erfolgt und die die Stellung der Klappe darstellenden Signale, die von der Positionserfassungseinrichtung 12 geliefert werden, zur weiteren Auswertung und Verarbeitung an eine nicht dargestellte Regeleinrichtung abgegeben werden.

Zur berührungslosen Positionserfassung ist ein digitaler Impulsgeber denkbar, mit einer drehbaren Scheibe sowie mit dieser zusammenwirkenden Sensoren (Hallsensoren) zur Abgabe von digitalen, von der Drehrichtung des Impulsgebers abhängigen Impulsen. In den Hallsensoren werden beispielsweise zwei sinusförmige Spannungen erzeugt, die durch den Versatz der Hallsensoren um beispielsweise 90° auch um 90° je nach Drehrichtung der Motorwelle 11 phasenverschoben sind. Anders als bei diesem digitalen Impulsgeber, der eine Information nur beim Drehen der Motorwelle 11 liefert, kann auch die Position der drehbaren Motorwelle 11 zyklisch (zum Beispiel alle 10 ms) durch das Messen der Werte der Spannungen der Hallsensoren und eine Zuordnung der gemessenen Spannungen zu einem Winkel zwischen 0 und 360° bestimmt werden. Sofern eine Winkeldifferenz zwischen zwei Messungen auftritt, wird die Drehgeschwindigkeit und Drehrichtung erkannt. Hierbei kommt es darauf an, welcher Impuls einer Reihe vor dem Impuls der anderen Reihe zuerst erscheint. Es können auch zyklisch jeweils zwei analoge Werte gemessen und diesen zwei Werten jeweils ein Winkel zugeordnet werden. So kann auch bei Stillstand der Motorwelle 11 die genaue Position ermittelt werden, was beim digitalen Impulsgeber nicht möglich ist.

Es sei noch darauf hinzuweisen, daß das Gehäuse 2 und/oder der Deckel 3 komplett aus einem metallischem, komplett aus einem nichtmetallischem Werkstoff (beispielsweise Kunststoff) oder einer Kombination davon hergestellt ist.

Eine weitere besonders vorteilhafte Ausgestaltung der Lastverstelleinrichtung gemäß Figur 1 ist darin zu sehen, daß diese keine Einrichtung zur Einstellung einer Notposition der Drosselklappe oder dergleichen aufweist. Damit entfallen die weiteren Elemente (wie beispielsweise Mitnehmerelemente, Steuerelemente, Koppelfeder und dergleichen), mit denen im Falle eines Ausfalles des Stellantriebes eine Notlaufposition der Drosselklappe eingestellt wird, wie dies noch bei der DE 38 15 735 A1 der Fall ist. Durch den Entfall dieser Bauelemente verringert sich in vorteilhafter Weise in einem weiteren Maße der Bauraum sowie der Montageaufwand, der nun nicht mehr erforderlich ist.

### Bezugszeichenliste

- 1.: Lastverstelleinrichtung
- 2.: Gehäuse
- 3.: Deckel
- 4.: Luftdurchlaßbereich
- 5.: Welle
- 6.: Elektromotor
- 7.: Zahnrad
- 8.: Zahnrad
- 9.: Zahnrad
- 10.: Rückstellfeder
- 11.: Motorwelle
- 12.: Positionserfassungseinrichtung
- 13.: Stecker
- 14.: elektrische Anschlüsse

## Patentansprüche

1. Verstelleinrichtung mit einem einen Luftdurchlaßbereich (4) verändernden, auf einer Welle (5) angeordneten Element, wobei das Element in Abhängigkeit vorgebbarer Parameter von einem Stellantrieb, gegebenenfalls untersetzt, antreibbar ist und eine Posititonserfassungseinrichtung (12) im Bereich des Stellantriebs, auf der dem Abtrieb des Stellantriebes entgegengesetzten Seite vorgesehen ist, die ein die Stellung des Elementes darstellendes Signal liefert, **dadurch gekennzeichnet, daß** der Stellantrieb ein parallel zur Welle (5) angeordneter Elektromotor (6) mit einer Motorwelle (11) ist und über ein Untersetzungsgetriebe auf die Welle (5) wirkt, wobei die Positionserfassungseinrichtung (12) in dem dem Untersetzungsgetriebe abgewandten Bereich der Motorwelle (11) des Elektromotors (6), die auf das Untersetzungsgetriebe wirkt, in einer Flucht mit der Motorwelle (11) angeordnet ist, wobei die Positionserfassungseinrichtung (12) berührungslos wirkt und als Hallsensor ausgebildet ist.

2. Verstelleinrichtung nach einem der vorhergehenden Ansprüche, **dadurch gekennzeichnet, daß** die Bauteile der Verstelleinrichtung in einem Gehäuse (2) angeordnet sind.

3. Verstelleinrichtung nach Anspruch 2, **dadurch gekennzeichnet, daß** das Gehäuse (2) ein Kunststoffgehäuse ist.

4. Verstelleinrichtung nach einem der vorhergehenden Ansprüche, ausgebildet als Lastverstelleinrichtung zur Einstellung der Leistung einer Brennkraftmaschine, wobei das Element als Drosselklappe oder Drosselschieber ausgestaltet ist.

5. Verstelleinrichtung nach Anspruch 3, **dadurch gekennzeichnet, daß** die Lastverstelleinrichtung keine Einrichtung zur Einstellung einer Notposition der Drosselklappe (des Drosselschiebers) aufweist.

6. Verstelleinrichtung nach einem der vorhergehenden Ansprüche, ausgebildet als Luftzufuhreinrichtung einer Klimaeinrichtung (Klimaanlage) insbesondere eines Fahrzeuges.

## Claims

1. Control device having an element which varies an air passage area (4), arranged on a shaft (5), in which case the element can be driven, possibly with a step-down ratio, by an actuating drive as a function of parameters which can be determined, and a position detection device (12) is provided in the region of the actuating drive, on the side of the actuating drive remote from the drive, which position detection device supplies a signal representing the position of the element, **characterized in that** the actuating drive is an electric motor (6), which is arranged parallel to the shaft (5) and has a motor shaft (11), and acts via a step-down transmission down on the shaft (5), with the position detection device (12) being arranged **in that** region of the motor shaft (11) of the electric motor (6) which faces away from the step-down transmission, which acts on the step-down transmission and is arranged aligned with the motor shaft (11), with the position detection device (12) operating in a noncontacting manner and being in the form of a Hall sensor.

2. Control device according to one of the preceding claims, **characterized in that** the components of the control device are arranged in a housing (2).

3. Control device according to Claim 2, **characterized in that** the housing (12) is a plastic housing.

4. Control device according to one of the preceding claims, designed as a load control device for adjusting the power of an internal combustion engine, in which case the element is designed as a throttle flap or throttle slide.

5. Control device according to Claim 3, **characterized in that** the load control device has no device for setting the throttle flap (the throttle slide) in an emergency position.

6. Control device according to one of the preceding claims, designed as an air supply device of an air-conditioning device (air-conditioning system), in particular in a vehicle.

## Revendications

1. Dispositif de réglage comportant un élément disposé sur un arbre (5) et modifiant une zone (4) de passage dair, cet élément pouvant être entraîné par un entraînement de positionnement, le cas échéant démultiplié, en fonction de paramètres pouvant être prédéterminés, et un dispositif (12) pour relever la position, qui fournit un signal représentant la position de l'élément, étant prévu dans la zone de l'entraînement de positionnement, sur le côté opposé à l'entraînement de positionnement,
**caractérisé en ce que**
l'entraînement de positionnement est un moteur électrique (6), disposé parallèlement à l'arbre (5) et comportant un arbre moteur (11), et **en ce qu'**il agit sur l'arbre (5) par un engrenage démultiplicateur, le dispositif (12) pour relever la position étant disposé aligné avec l'arbre moteur (11), dans la zone, opposée à l'engrenage de démultiplication, de l'arbre moteur (11) du moteur électrique(6) agissant sur l'engrenage de démultiplication, le dispositif (12) pour relever la position agissant sans contact et étant réalisé sous la forme d'un détecteur de Hall.

2. Dispositif de réglage suivant l'une des revendications précédentes, **caractérisé en ce que** les composants du dispositif de réglage sont disposés dans un boîtier (2).

3. Dispositif de réglage suivant la revendication 2, **caractérisé en ce que** le boîtier (2) est un boîtier en matière plastique.

4. Dispositif de réglage suivant l'une des revendications précédentes, réalisé sous la forme d'un dispositif de réglage de la charge pour régler la puissance d'un moteur à combustion interne, l'élément étant conçu sous la forme d'un papillon d'étranglement ou d'un coulisseau d'étranglement.

5. Dispositif de réglage suivant la revendications 3, **caractérisé en ce que** dispositif de réglage de la charge ne présente pas de dispositif pour régler une position de secours du papillon d'étranglement (ou du coulisseau d'étranglement).

6. Dispositif de réglage suivant l'une des revendications précédentes, réalisé sous la forme d'un dispositif d'arrivée d'air d'un dispositif de climatisation (installation de climatisation), en particulier d'un véhicule automobile.
